# EUROPÄISCHE PATENTSCHRIFT

(11) **EP 1 472 921 B1**
(45) Veröffentlichungstag und Bekanntmachung des Hinweises auf die Patenterteilung: **14.05.2008**
(21) Anmeldenummer: 04009931.9
(22) Anmeldetag: 27.04.2004
(51) Int. Cl.: A01B 35/22

(54) **Bodenbearbeitungswerkzeug**
Soil working tool
Outil de travail du sol

(30) Priorität: 02.05.2003 DE 10319627
(43) Veröffentlichungstag der Anmeldung: 03.11.2004
(73) Patentinhaber: Rabe Agri GmbH, 49152 Bad Essen (DE)
(72) Erfinder: von Allwörden, Wilhelm, 49152 Bad Essen (DE)
(74) Vertreter: Tappe, Hartmut

(56) Entgegenhaltungen:
- EP-A- 0 891 687
- WO-A-01/24603
- DE-B- 1 134 251
- DE-C- 538 035
- US-A- 5 465 796

## Beschreibung

Die Erfindung betrifft ein Bodenbearbeitungswerkzeug, insbesondere für einen Grubber, mit den Merkmalen nach dem Oberbegriff des Patentanspruches 1.

In der WO 01/24603 ist beispielsweise ein derartiges Bodenbearbeitungswerkzeug beschrieben. Die dort beschriebene Scharbefestigung am unteren Zinkenstielende mittels Form- und Reibschluß hat sich hinsichtlich Auswechselbarkeit und Verlustsicherheit bewährt.

Beim Wechseln des Schares wird jedoch zum Eindrücken des Sicherungselementes ein Spezialwerkzeug benötigt. Durch Staub und Korrosion kann der Hub des Sicherungselementes begrenzt sein. Das Wechseln des Schares ist dann nur noch mit Mehraufwand möglich.

Der Erfindung liegt die Aufgabe zugrunde, für ein durch Form- und Reibschluß an einem Zinkenstiel befestigtes Bodenbearbeitungswerkzeug eine einfache Verlustsicherung zu schaffen, die eine werkzeuglose Entsicherung des Schares ermöglicht.

Erfindungsgemäß wird, wie beansprucht, die Aufgabe dadurch gelöst, daß der Aufnahmeschaft des Schares seitlich Aufnahmeschaftverlängerungen aufweist, die seitlich über den Stiel und über das Sicherungsmittel hinausragen. An einer bevorzugten Ausführungsform ist am Zinkenstiel unterhalb des Durchbruches eine Nase angeordnet, die als Verdrehsicherung für das Sicherungsmittel ausgebildet ist und zum Schutz für das Sicherungsmittel nach hinten über das Sicherungsmittel hinausragt. Durch diese schützenden Aufnahmeschaftverlängerungen und/oder die Zinkenstielnase wird das unkontrollierte Lösen des Sicherungsmittels während der Arbeit vermieden.

Die Aufnahmeschaftverlängerungen lassen sich in einfacher Weise ohne zusätzliche Arbeitsgänge leicht und materialsparend ausbilden. Die Zinkenstielnase läßt sich durch eine Konturänderung in einfacher Weise am Zinkenstielende anordnen.

Weitere Vorteile und Merkmale der Erfindung gehen aus den Unteransprüchen sowie den Beispielbeschreibungen und den Zeichnungen hervor. Dabei zeigt:

**Fig.** 1 ein Bodenbearbeitungswerkzeug mit Schar und Zinkenstiel in der Seitenansicht und im Schnitt

**Fig. 2** ein Bodenbearbeitungswerkzeug mit Doppelherzschar und Zinkenstiel in der Seitenansicht und im Schnitt

**Fig. 3** ein Bodenbearbeitungswerkzeug im Schnitt A-A

**Fig.4** ein Bodenbearbeitungswerkzeug mit aufschraubbarem Scharaufaufnahmekeil in der Seitenansicht und im Schnitt

**Fig. 5** ein Bodenbearbeitungswerkzeug im Schnitt B-B

**Fig. 6** ein unteres Zinkenstielende mit Zinkenstielnase und Sicherungselement mit Klappstecker in Ansicht "X"

**Fig. 7** ein unteres Zinkenstielende mit Zinkenstielnase und Sicherungselement mit Federstecker in Ansicht "X"

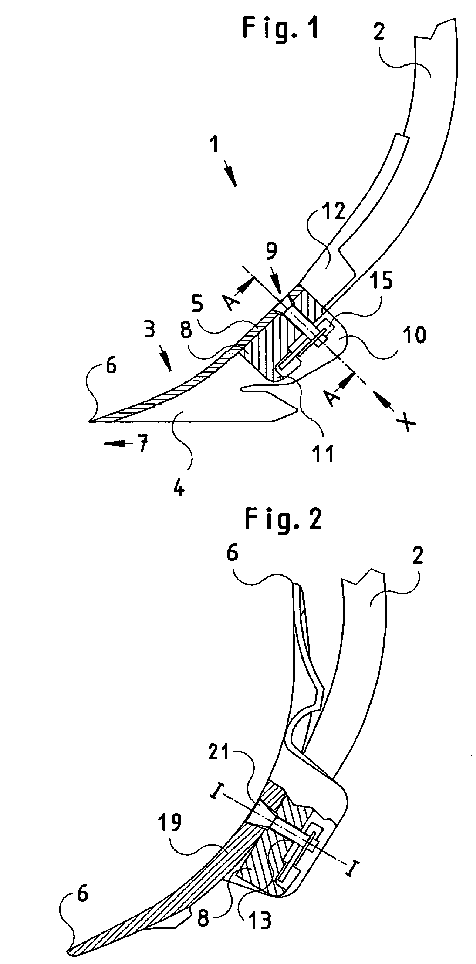

Die **Fig. 1** zeigt ein erfindungsgemäßes Bodenbearbeitungswerkzeug **3** mit einem Zinkenstiel **2** für einen nicht dargestellten Grubber. Die Befestigung des Zinkenstieles **2** am Grubberrahmen ist nicht dargestellt. Der Bodenbearbeitungszinken **1** weist den Zinkenstiel **2** mit dem angeformten Scharaufnahmekeil **18,** der angeformten Zinkenstielnase **11** und den Durchbruch **13** auf. Das auf dem Scharaufnahmekeil **18** angeordnete Bodenbearbeitungswerkzeug **3** weist ein Schar **4** mit einer in Arbeitsrichtung **7** weisenden Scharspitze **6** auf und einen Aufnahmeschaft **5** mit Aufnahmeschaftverlängerungen **10** und einen Durchbruch **13** für das Sicherungselement **9.** Dieser Durchbruch **13** hat im Aufnahmeschaft **5** zum Toleranzausgleich einen größeren Querschnitt. Oberhalb vom Aufnahmeschaft **5** ist vorzugsweise ein Leitblech **12** angeordnet. Das Sicherungselement **9** weist ein Sicherungsmittel **15** auf, wobei das Sicherungsmittel **15** ein unverlierbares Teil des Sicherungselementes **9** sein kann.

Die **Fig. 2** zeigt ein weiteres erfindungsgemäßes Beispiel eines Bodenbearbeitungswerkzeuges **3**, bei dem gleiche Teile mit gleichen Bezugszeichen versehen sind. Die Ausführungsform unterscheidet sich von der in **Fig. 1** dargestellten Ausführung dadurch, daß ein Doppelherzschar **19** mit 2 Scharspitzen **6** dargestellt ist. Dieses Doppelherzschar **19** ist nach dem Verschleiß der unteren Scharspitze **6** durch Wenden um 180° um die Symmetrieachse I-I weiter nutzbar.

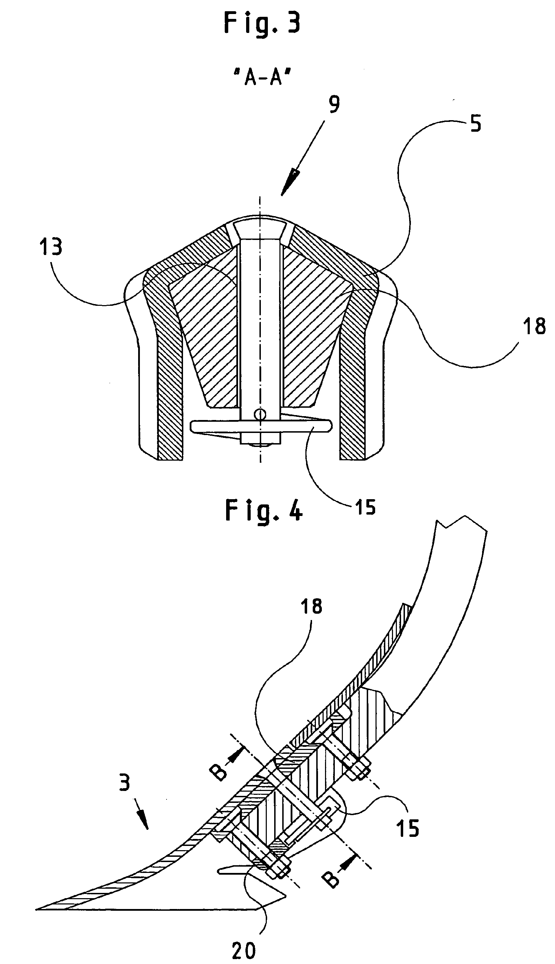

Der Schnitt A-A in **Fig. 3** stellt den Aufnahmeschaft **5** mit Aufnahmeschaftverlängerungen **10** und die fluchtenden Durchbrüche **13** dar sowie das untere Zinkenstielende **8** mit dem angeformten Scharaufnahmekeil **18** und das Sicherungselement **9** mit Sicherungsmittel **15.**

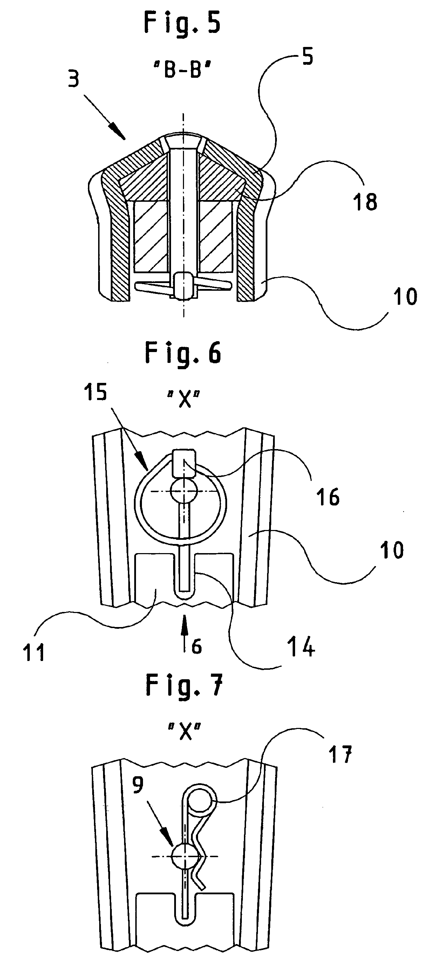

Für untere Zinkenstielenden **8** ohne angeformten Scharaufnahmekeil **18** ist es denkbar, einen vorzugsweise schraubbaren Scharaufnahmekeil **18** zur Aufnahme des Bodenbearbeitungswerkzeuges **3** anzuordnen, wie in **Fig. 4** dargestellt ist. Zur Sicherung gegen Verlust des Sicherungsmittels **15** wird vorzugsweise ein Schutzklotz **20** angeordnet. Die reib- und formschlüssige Verbindung vom Aufnahmeschaft **5** und dem nicht einstückig angeformten Scharaufnahmekeil **18** ist in **Fig. 5** dargestellt.

Die **Fig. 6** zeigt in Ansicht "X" erfindungsgemäß ein Sicherungsmittel **15** zum Sicherungselement **9** in Form eines Klappsteckers **16** mit einer Verdrehsicherung **14** an der Zinkenstielnase **11.**

Es ist auch möglich, wie in **Fig. 7** dargestellt, das Sicherungselement **9** mit einem Federstecker **17** gegen Verlust und/oder Verdrehung zu sichern.

Sollte das Bodenbearbeitungswerkzeug **3** während der Arbeit einen Schlag von der Rückseite bekommen, so stellt das Sicherungselement **9** sicher, daß der Aufnahmeschaft **5** nicht von dem Scharaufnahmekeil **18** rutscht. Die Aufnahmeschaftverlängerungen **10** und die Zinkenstielnase **11** verhindern beim Absetzen oder Einziehen des Bodenbearbeitungswerkzeuges **3** in den Boden, daß sich das Sicherungsmittel **15** unkontrolliert vom Sicherungselement **9** löst. Durch die Verdrehsicherung **14** wird der Verschleiß durch selbsttätiges Drehen am Sicherungselement **9** verringert.

### Bezugszeichenliste

- 1: Bodenbearbeitungszinken
- 2: Zinkenstiel
- 3: Bodenbearbeitungswerkzeug
- 4: Schar
- 5: Aufnahmeschaft
- 6: Scharspitze
- 7: Arbeitsrichtung
- 8: unteres Zinkenstielende
- 9: Sicherungselement
- 10: Aufnahmeschaftverlängerungen
- 11: Zinkenstielnase
- 12: Leitblech
- 13: Durchbruch
- 14: Verdrehsicherung
- 15: Sicherungsmittel
- 16: Klappstecker
- 17: Federstecker
- 18: Scharaufnahmekeil
- 19: Doppelherzschar
- 20: Schutzklotz
- 21: Bolzen

- I-I: Symmetrieachse

## Patentansprüche

1. Aus Schar (4) mit Aufnahmeschaft (5) bestehendes Bodenbearbeitungswerkzeug **(3)** an einem Bodenbearbeitungszinken **(1),** vorzugsweise Grubberzinken, welcher am unteren Ende des Zinkenstieles **(2)** zur reib- und formschlüssigen Aufnahme des Schares **(4)** und des Leitbleches **(12)** verjüngt ist, wobei sich das Leitblech **(12)** am unteren Ende und das Schar **(4)** am Aufnahmeschaft **(5)** in Arbeitsrichtung **(7)** bzw. zur Scharspitze **(6)** hin verjüngt, **dadurch gekennzeichnet, daß** das untere Zinkenstielende **(8)** und der Aufnahmeschaft **(5)** des Schares **(4)** einen fluchtenden Durchbruch **(13)** zur Aufnahme eines werkzeuglos lösbaren ein Sicherungsmittel **(15)** aufweisenden Sicherungselementes **(9)** aufweist, und am Aufnahmeschaft **(5)** des Schares **(4)** seitliche Aufnahmeschaftverlängerungen **(10)** angeordnet sind die seitlich über den Stiel **(2)** und über das Sicherungsmittel **(15)** hinausragen.

2. Bodenbearbeitungswerkzeug **(3)** nach Anspruch 1, **dadurch gekennzeichnet, daß** das Sicherungselement **(9)** einen Bolzen **(21)** mit einem werkzeuglos lösbaren Sicherungsmittel **(15)** aufweist.

3. Bodenbearbeitungswerkzeug **(3)** nach Anspruch 2, **dadurch gekennzeichent, daß** das Sicherungsmittel **(15)** als Klappstecker **(16)** ausgebildet ist.

4. Bodenbearbeitungswerkzeug **(3)** nach Anspruch 2, **dadurch gekennzeichnet, daß** das Sicherungsmittel **(15)** als Federstecker **(17)** ausgebildet ist.

5. Bodenbearbeitungswerkzeug **(3)** nach Anspruch 1, **dadurch gekennzeichnet, daß** das Sicherungselement **(9)** eine Selbstsicherung gegen. Verlust aufweist.

6. Bodenbearbeitungswerkzeug **(3)** nach Anspruch 1, **dadurch gekennzeichnet, daß** das Schar **(4),** der Aufnahmeschaft **(5)** und die seitlichen Aufnahmeschaftverlängerungen **(10)** einstückig ausgebildet sind.

7. Bodenbearbeitungswerkzeug **(3)** nach einem oder mehreren der vorgenannten Ansprüche, **dadurch gekennzeichnet, daß** am unteren Zinkenstielende **(8)** eine Zinkennase **(11)** als Verlust- und/oder Verdrehsicherung angeordnet ist.

8. Bodenbearbeitungswerkzeug **(3)** nach Anspruch 1, **dadurch gekennzeichnet, daß** der Scharaufnahmekeil **(18)** auf das untere Zinkenstielende **(8)** aufschraubbar ist und der Druchbruch **(13)** im Scharaufnahmekeil **(18)** mit den Durchbrüchen **(13)** des Schares **(4)** und des Zinkenstielendes **(8)** fluchtet.

## Claims

1. A soil cultivation tool (3), consisting of a coulter (4) with a holding shaft (5), on a soil cultivation prong (1), preferably a grubber prong, which is tapered at the lower end of the prong stem (2) for holding the coulter (4) and the deflector (12) with a friction- or positive-locking fit, wherein the deflector (12) tapers at the lower end and the coulter (4) on the holding shaft (5) tapers in the working direction (7), or towards the coulter tip (6),
**characterized in that**
the lower prong stem end (8) and the holding shaft (5) of the coulter (4) have a flush aperture (13) for holding a securing element (9), having a securing means (15) detachable without using a tool, and on the holding shaft (5) of the coulter (4) lateral holding shaft extensions (10) are arranged, which protrude at laterally beyond the stem (2) and beyond the securing means (15).

2. The soil cultivation tool (3) according to Claim 1,
**characterized in that**
the securing element (9) has a bolt (21) with a securing means (15) that is detachable without using a tool.

3. The soil cultivation tool (3) according to Claim 2,
**characterized in that**
the securing means (15) is constructed in the form of a linch pin (16).

4. The soil cultivation tool (3) according to Claim 2,
**characterized in that**
the securing means (15) is constructed in the form of a spring cotter (17).

5. The soil cultivation tool (3) according to Claim 1,
**characterized in that**
the securing element (9) has a self-locking device to prevent loss.

6. The soil cultivation tool (3) according to Claim 1,
**characterized in that**
the coulter (4), the holding shaft (5) and the lateral holding shaft extensions (10) are constructed integrally.

7. The soil cultivation tool (3) according to one or more of the following Claims,
**characterized in that**
a prong latch (11) is arranged on the lower prong stem end (8) to secure against loss and/or twisting.

8. The soil cultivation tool (3) according to Claim 1,
**characterized in that**
the coulter holding piece (18) can be screwed on to the end (8) of the prong stem, and the aperture (13) in the coulter holding piece (18) is flush with the apertures (13) of the coulter (4) and the prong stem end (8).

## Revendications

1. Outil de travail du sol (3) consistant dans un soc (4) avec tige de réception (5) sur une dent de travail du sol (1), de préférence une dent de cultivateur, qui sur l'extrémité inférieure du manche de la dent (2) est rétrécie pour la réception par friction et par complémentarité de forme du soc (4) et de la tôle de guidage (12), la tôle de guidage (12) se rétrécissant sur l'extrémité inférieure et le soc (4) se rétrécissant sur la tige de réception (5), en direction de travail (7), respectivement vers la pointe du soc (6), **caractérisé en ce que** l'extrémité inférieure du manche de la dent (8) et la tige de réception (5) du soc (4) comportent un perçage aligné (13) pour le logement d'un élément d'arrêt (9) amovible sans outil, comportant un moyen d'arrêt (15) et **en ce que** sur la tige de réception (5) du soc (4) sont disposés des prolongements de la tige de réception (10), qui saillissent latéralement par dessus le manche (2) et par dessus le moyen d'arrêt (15).

2. Outil de travail du sol (3) selon la revendication 1, **caractérisé en ce que** l'élément d'arrêt (9) comporte un boulon (21) avec un moyen d'arrêt (15) amovible sans outil.

3. Outil de travail du sol (3) selon la revendication 2, **caractérisé en ce que** le moyen d'arrêt (15) est conçu sous la forme d'une esse d'essieu (16).

4. Outil de travail du sol (3) selon la revendication 2, **caractérisé en ce que** le moyen d'arrêt (15) est conçu sous la forme d'une goupille à ressort (17).

5. Outil de travail du sol (3) selon la revendication 1, **caractérisé en ce que** l'élément d'arrêt (9) comporte un autoblocage contre la perte.

6. Outil de travail du sol (3) selon la revendication 1, **caractérisé en ce que** le soc (4), la tige de réception (5) et les prolongements latéraux de la tige de réception (10) sont conçus en monobloc.

7. Outil de travail du sol (3) selon l'une quelconque ou plusieurs des revendications précédentes, **caractérisé en ce que** sur l'extrémité inférieure du manche de la dent (8) un tenon de dent (11) est disposé en tant que sécurité anti perte et/ou anti torsion.

8. Outil de travail du sol (3) selon la revendication 1, **caractérisé en ce que** la pièce de réception du soc (18) peut se visser sur l'extrémité inférieure du manche de la dent (8) et **en ce que** le perçage (13) dans la pièce de réception du soc (18) est aligné sur les perçages (13) du soc (4) et de l'extrémité du manche de la dent (8).
